# EUROPÄISCHE PATENTSCHRIFT

(11) **EP 1 264 731 B1**
(45) Veröffentlichungstag und Bekanntmachung des Hinweises auf die Patenterteilung: **04.12.2013**
(21) Anmeldenummer: 02405387.8
(22) Anmeldetag: 14.05.2002
(51) Int. Cl.: B60Q 1/076

(54) **Stellvorrichtung und -verfahren zur Einstellung eines von einem Scheinwerfer ausgesendeten Lichtbündels**
Actuating device and method for adjusting light beams emitted by a headlamp
Dispositif d'actionnement et procédé pour ajuster les rayons lumineux émis par un phare

(30) Priorität: 17.05.2001 EP 01810493; 19.06.2001 EP 01810601
(43) Veröffentlichungstag der Anmeldung: 11.12.2002
(73) Patentinhaber: Johnson Electric Switzerland AG, 3280 Murten (CH)
(72) Erfinder: Specht, Thomas, 1789 Lugnorre (CH); Rudaz, Claude, 1763 Granges-Paccot (CH); Thiemer, Helmut, 6072 Sachseln (CH); Böttger, Axel, 01324 Dresden (DE)
(74) Vertreter: AMMANN PATENTANWÄLTE AG BERN

(56) Entgegenhaltungen:
- EP-A- 0 661 193
- EP-A- 1 083 088
- DE-A- 19 810 480
- DE-U1- 29 907 483
- GB-A- 2 192 449
- US-A- 4 482 939
- US-A- 4 833 573
- US-A- 4 954 933
- US-A- 5 868 488

## Beschreibung

Die Erfindung bezieht sich auf eine Stellvorrichtung gemäss Oberbegriff des unabhängigen Vorrichtungsanspruchs.

Eine derartige Stellvorrichtung ist aus US 5,868,488 bekannt.

Die Erfindung bezieht sich weiter auf ein Verfahren gemäss Oberbegriff des unabhängigen Verfahrensanspruchs.

Durch die Beladung eines Fahrzeuges oder durch Nickbewegungen des Fahrzeuges kann die Richtung des von einem Scheinwerfer ausgestrahlten Lichtbündels so verändert werden, dass z.B. entgegenkommende Fahrer geblendet werden. Um diese Gefahr der Blendung zu verringern, werden Stellvorrichtungen eingesetzt, die es erlauben, z.B. den Reflektor oder den Leuchtweitensteller, durch eine Steuerung entsprechend einzustellen. Zur Erhöhung der eigenen Fahrsicherheit werden auch Stellvorrichtungen entwickelt, die beim Fahren einer Kurve eine Schwenkung der Scheinwerfer bewirken.

Die bekannten Stellvorrichtungen haben den Nachteil, dass sie vergleichsweise gross sind und wegen den beschränkten Platzverhältnissen im Einbaubereich der Scheinwerfer den Einbau in ein Fahrzeug erschweren.

Eine erste Aufgabe der vorliegenden Erfindung ist daher, eine Stellvorrichtung der eingangs erwähnten Art zur Verfügung zu stellen, die eine möglichst kompakte Baugrösse aufweist, aber dennoch ein zuverlässiges Funktionieren ermöglicht.

Eine zweite Aufgabe der vorliegenden Erfindung ist es, ein Verfahren der eingangs erwähnten Art anzugeben, bei welchem eine Vorrichtung mit einer kompakteren Bauweise, insbesondere mit kleineren Stellelemente, eingesetzt wird, und welches dennoch eine Schwenkung des Lichtbündels um zwei Achsen ermöglicht.

Die erstgenannte Aufgabe wird durch eine erfindungsgemässe Stellvorrichtung gelöst, welche im unabhängigen Vorrichtungsanspruch angegeben ist.

Die zweitgenannte Aufgabe wird durch ein erfindungsgemässes Verfahren gelöst, welches im unabhängigen Verfahrensanspruch angegeben ist.

Die abhängigen Ansprüche geben bevorzugte Ausführungen an.

Die erfindungsgemässe Stellvorrichtung hat den Vorteil, dass eine kompakte Baugrösse und somit eine Platzeinsparung ermöglicht wird. Weitere Vorteile gegenüber bekannten Stellvorrichtungen sind eine Erhöhung der Zuverlässigkeit, mit welcher die Stellvorrichtung arbeitet, eine Vereinfachung der Montage und eine Kostenreduktion für die Herstellung.

Das erfindungsgemässe Verfahren hat den Vorteil, dass zur Schwenkbewegung auch schwächere und somit kleinere Stellelemente als bisher genügen, um die auftretenden Reibungs- und Trägheitskräfte zu überwinden.

Die Erfindung wird im Folgenden anhand von bevorzugten Ausführungsbeispielen unter Bezugnahme auf Figuren erläutert.

Fig. 1 zeigt schematisch ein erstes Ausführungsbeispiel der erfindungsgemässen Stellvorrichtung,

und Fig. 2 zeigt schematisch ein zweites Ausführungsbeispiel der erfindungsgemässen Stellvorrichtung.

### 1. Ausführungsbeispiel

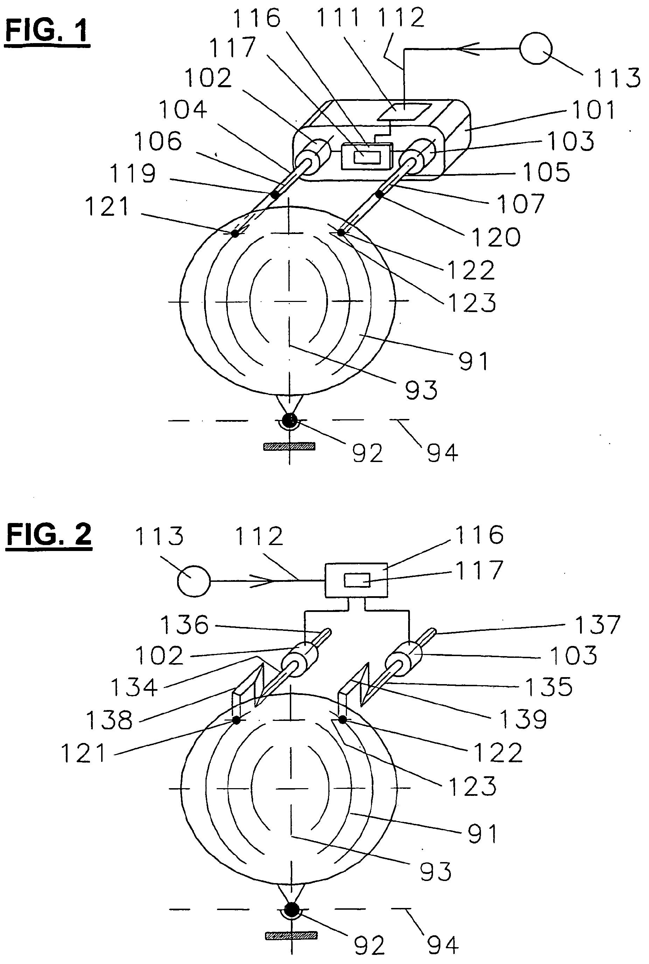

Fig. 1 zeigt ein erstes Ausführungsbeispiel der erfindungsgemässen Stellvorrichtung.

Ein Reflektor 91 eines Scheinwerfers ist an einer Halterung in Form eines Kugelgelenkes 92 drehbar um mindestens zwei Schwenkachsen 93 und 94 gelagert.

Vorzugsweise stehen die beiden Schwenkachsen 93 und 94 senkrecht aufeinander, wobei die eine Schwenkachse 93 entlang der Vertikalen verläuft.

Wie Fig. 1 zeigt, umfasst die Stellvorrichtung ein Gehäuse 101, in welchem zwei Stellelemente 102 und 103 enthalten sind. Jedes der beiden Stellelemente 102, 103 ist mit einem Schaft 104, 105 mechanisch verbunden, wobei die beiden Schäfte 104 und 105 je eine mechanische Achse bilden und auf der einen Seite des Gehäuses 101 hervorragen.

Die beiden Stellelemente 102 und 103 sind je mit einem Linearantrieb versehen, der es ermöglicht jeweils einen Schaft 104, 105 entlang seiner Achse 106, 107 mit einem bestimmten Hub zu verschieben. Sie sind im Gehäuse 101 möglichst nahe zueinander, bevorzugterweise benachbart angeordnet, um eine kompakte Einheit zu bilden. In einer bevorzugten Ausbildung der Erfindung ist der Abstand zwischen den beiden Schäften 104 und 105 kleiner als der halbe Durchmesser des Reflektors 91.

Am Gehäuseäusseren sind Kabelanschlüsse 111 z. B. in Form einer Steckverbindung vorgesehen, an welche elektronische Elemente 113, die ausserhalb des Gehäuses 101 am Fahrzeug angebracht sind, mittels elektrischer Verbindungsleitungen 112 angeschlossen werden können.

Analog der obigen Beschreibung kann anstelle des Gehäuses 101 auch ein Träger z. B. eine Trägerplatte benutzt werden, um die beiden Stellelemente 102 und 103 darauf nahe zueinander, bevorzugterweise benachbart zusammen mit den Kabelanschlüssen 111 anzuordnen.

In einer bevorzugten Ausbildung der Erfindung ist innerhalb des Gehäuses 101 oder auf dem Träger eine Steuerschaltung 116 zur Ansteuerung der beiden Linearantriebe angeordnet.

In einer weiteren Ausführung ist ein Teil oder die ganze Steuerschaltung 116 ausserhalb des Gehäuses 101 oder des Trägers angeordnet und ist mit den Kabelanschlüssen 111 elektrisch verbunden.

Die beiden Schäfte 104, 105 weisen jeweils an ihrem Ende ein Gelenk 119, 120 mit zwei Freiheitsgraden auf, z.B. in Form eines Kardangelenkes. Die Gelenke 119, 120 sind jeweils mit einer Verbindungsstelle 121, 122 des Reflektors mechanisch verbindbar. Die beiden Verbindungsstellen 121 und 122 können z. B. je ein Kugelgelenk enthalten, so dass die beiden Schäfte 106 und 107 nebst den Kardangelenken 119 bzw. 120 jeweils noch durch ein Gelenk 121 bzw. 122 mit drei Freiheitsgraden beweglich gelagert sind.

In einer bevorzugten Ausführung ist die Gerade 123, welche durch die beiden Verbindungsstellen 121 und 122 definiert ist, im Wesentlichen parallel zur horizontalen Schwenkachse 94. In einer weiteren Ausführung ist das Gehäuse 101 seitlich vom Reflektor 91 angeordnet und die Gerade 123, welche durch die beiden Verbindungsstellen 121 und 122 definiert ist, im Wesentlichen parallel zur vertikalen Schwenkachse 93.

Vorzugsweise etwa mittig zwischen den beiden Schäften 104 und 105 ist die Halterung 92 angeordnet, so dass diese und die beiden Verbindungsstellen 121 und 122 in den Eckpunkten eines im Wesentlichen gleichschenkligen Dreiecks angeordnet sind, wobei ihre Grundlinie entlang der Geraden 123 verläuft, welche durch die beiden Verbindungsstellen 121 und 122 definiert ist.

Die Steuerschaltung 116 enthält elektronische Bauteile 117, z.B. einen Mikroprozessor, um Signale aufzunehmen und zu verarbeiten, welche Informationen über den Zustand des Fahrzeuges enthalten.

Die Signale werden vorzugsweise von Sensoren 113 geliefert. Entsprechend dieser Signale sind die beiden Stellelemente 102 und 103 ansteuerbar, um eine gleichzeitige Bewegung der beiden Schäfte 104 und 105 zu bewirken. In einer weiteren Ausführung sind mit der Steuerschaltung 116 weitere Steuersignale erzeugbar sind, mit welcher weitere Stellelemente ansteuerbar sind.

Gemäss Fig. 1 werden die beiden Schäfte 104 und 105 für eine Auf-Ab-Bewegung des Lichtbündels gleichzeitig mit im Wesentlichen gleichem Hub in die gleiche Richtung bewegt. Für die Links-Rechts-Bewegung des Lichtbündels werden die Schäfte 104 und 105 gleichzeitig mit im Wesentlichen gleichem Hub in entgegengesetzten Richtungen bewegt. Eine entsprechende Funktionsweise der Stellvorrichtung ergibt sich je nach Anordnung der Halterung 92 und der beiden Verbindungsstellen 121 und 122 im Einbaubereich des Scheinwerfers.

Die Stellvorrichtung hat besonders den Vorteil, dass beide Stellelemente 102 und 103 bei einer Schwenkung des Reflektors 91 um eine der beiden Schwenkachse 93, 94 aktiv arbeiten und somit die Verstellkraft doppelt so gross ist. Um eine Schwenkung zu erzeugen, reichen also weniger kräftige Stellelemente aus, was eine besonders kompakte Bauweise ermöglicht.

### 2. Ausführungsbeispiel

Fig. 2 zeigt ein zweites Ausführungsbeispiel der erfindungsgemässen Stellvorrichtung, welche eine Variante des 1. Ausführungsbeispiels ist.

Die beiden Stellelemente 102 und 103 sind benachbart zueinander angeordnet. Im Unterschied zum 1. Ausführungsbeispiel sind die Schäfte 134 bzw. 135 direkt mit den Verbindungsstellen 121 bzw. 122 des Reflektors 91 verbunden.

Auf der Rückseite der beiden Stellelemente 102 und 103 befindet sich jeweils ein Lagerteil 136 bzw. 137, welches im Einbaubereich des Scheinwerfers mit dem Fahrzeug so verbunden wird, dass jeweils ein Lager mit zwei Freiheitsgraden, z.B. in Form eines Kardangelenkes, gebildet wird. Die beiden Stellelemente 102 und 103 werden somit im Unterschied zum 1. Ausführungsbeispiel nicht fest am Fahrzeug montiert, sondern sind mittels den Lagerteilen 136 und 137 beweglich gelagert, wodurch die Bewegungen der beiden Schäfte 134 bzw. 135 ausgeglichen werden können. Die rückseitige Anordnung der beiden Lagerteile 136 und 137 ermöglicht es, die Länge des Schaftes 134 bzw. 135 zu verkürzen, womit ein besonders kompakte Bauweise der Stellvorrichtung erzielt werden kann.

Wie aus Fig. 2 ersichtlich ist, ist das Ende 138 bzw..139 des jeweiligen Schaftes 134 bzw. 135 u-förmig abgewinkelt ("Kröpfung") und mit einem Kugelkopf versehen, wodurch mit der Verbindungsstelle 121 bzw. 122 jeweils ein Gelenk mit drei Freiheitsgraden gebildet wird. Mit der Abwinkelung des Schaftes 134 bzw. 135 wird erreicht, dass der Reflektor 91 mit einem grösseren Winkel um die Achse 94 gekippt werden kann.

Zum Schwenken des Reflektors 91 um die beiden Schwenkachsen 93 und 94 werden die Schäfte 134 und 135 analog wie beim 1. Ausführungsbeispiel gemeinsam gegensinnig oder gleichsinnig bewegt.

Aus der vorangehenden Beschreibungen sind dem Fachmann zahlreiche Abwandlungen zugänglich, ohne den Schutzbereich der Erfindung zu verlassen, der durch die Ansprüche definiert ist.

Analog wie oben beschrieben kann anstelle des Reflektors ein ganzer Scheinwerfer oder eine strahlenbeeinflussende Scheinwerferkomponente, welche im Scheinwerfer enthalten ist und welche die Richtung des Lichtbündels beeinflusst, wie z. B. eine Blende, ein Linsensystem oder Prismen, mittels Halterungen oder Gelenken drehbar um mindestens zwei Schwenkachsen gelagert sein. Entsprechend sind zur Schwenkung mittels der Stellvorrichtung die beiden mechanischen Achsen mit je einer Verbindungsstelle des Scheinwerfers oder der strahlenbeeinflussenden Scheinwerferkomponente mechanisch verbindbar.

In einer weiteren Ausführungsform wird die Steuerschaltung dazu verwendet, gleichzeitig mehr als einen Scheinwerfer oder eine Scheinwerferkomponente anzusteuern. So werden im Frontbereich von Fahrzeugen, insbesondere Kraftfahrzeugen, üblicherweise mindestens zwei Scheinwerfer zur Beleuchtung verwendet.

In einer weiteren Ausführungsform wird das sogenannte "Global Positioning System" dazu verwendet, Informationen über die Lage und geographische Position des Fahrzeuges zu erhalten, und daraus mittels der Steuerschaltung Steuersignale zur entsprechenden Einstellung des Lichtbündels zu erzeugen. Es ist auch möglich, durch Einbezugnahme von Daten über die Geometrie der Fahrstrasse und die Fahrgeschwindigkeit des Fahrzeuges nebst seiner momentanen auch seine zukünftige Lage und geographische Position zu berechnen, und das Lichtbündel entsprechend vorausschauend zu ändern.

### Bezugszeichenliste

- 91: Reflektor
- 92: Kugelgelenk
- 93: Vertikale Schwenkachse
- 94: Horizontale Schwenkachse
- 101: Gehäuse
- 102: 1. Stellelement
- 103: 2. Stellelement
- 104: 1. Schaft
- 105: 2. Schaft
- 106: Achse des 1. Schaftes
- 107: Achse des 2. Schaftes
- 111: Kabelanschlüsse
- 112: Elektrische Verbindungsleitung
- 113: Elektronische Bauelemente
- 116: Steuerschaltung
- 117: Elektronisches Bauteil
- 119: 1. Gelenk mit zwei Freiheitsgraden
- 120: 2. Gelenk mit zwei Freiheitsgraden
- 121: 1. Verbindungsstelle
- 122: 2. Verbindungsstelle
- 123: Gerade, welche durch die Verbindungsstellen 121 und 122 verläuft
- 134: 1. Schaft
- 135: 2. Schaft
- 136: 1. Lagerteil
- 137: 2. Lagerteil
- 138: gekröpftes Ende des 1. Schaftes 134
- 139: gekröpftes Ende des 2. Schaftes 135

## Patentansprüche

1. Stellvorrichtung zur gesteuerten Einstellung der
Richtung eines Lichtbündels, welches von einem Scheinwerfer
eines Fahrzeuges ausgesendet wird, wobei der Scheinwerfer
oder eine Scheinwerferkomponente (91), welche die
Richtung des Lichtbündels beeinflusst, um mindestens zwei
Schwenkachsen (93, 94) schwenkbar ist, wobei die
Stellvorrichtung folgende Komponenten umfasst:
ein erstes Stellelement (102), das einen ersten beweglichen Schaft (104; 134) als mechanische Achse enthält, dessen eines Ende mit einer ersten Verbindungsstelle (121) des Scheinwerfers oder der Scheinwerferkomponente (91) mechanisch verbindbar ist, und das einen ersten Linearantrieb umfasst zum Bewegen des ersten Schaftes entlang seiner Achse (106), und
ein zweites Stellelement (103), das einen zweiten beweglichen Schaft (105; 135) als mechanische Achse enthält, dessen eines Ende mit einer zweiten Verbindungsstelle (122) des Scheinwerfers oder der Scheinwerferkomponente (91) mechanisch verbindbar ist, und das einen zweiten Linearantrieb umfasst zum Bewegen des zweiten Schaftes (105; 135) entlang seiner Achse (107), **gekennzeichnet durch**
eine Steuerschaltung (116) zur Steuerung des ersten und des zweiten Stellelementes (102, 103), mit welcher Steuersignale erzeugbar sind, die eine gleichzeitige Bewegung des ersten und zweiten Schaftes (104, 105) bewirken, so dass beide Stellelemente (102, 103) gemeinsam eine Schwenkung des Lichtbündels um die jeweilige Schwenkachse (93, 94) bewirken.

2. Stellvorrichtung gemäss Anspruch 1, **dadurch gekennzeichnet, dass** sie eingerichtet ist zum Bewegen des Scheinwerfers oder der Scheinwerferkomponente (91), der bzw. die an einer Halterung (92) beweglich gelagert ist, wobei die Halterung (92) und die beiden Verbindungsstellen (121, 122) in den Eckpunkten eines im Wesentlichen gleichschenkligen Dreiecks angeordnet sind und wobei die die beiden Verbindungsstellen (121, 122) verbindende Achse (123) im Wesentlichen entlang der Grundlinie des gleichschenkligen Dreiecks verläuft.

3. Stellvorrichtung nach einem der Ansprüche 1 bis 2, **dadurch gekennzeichnet, dass** die Achse (123), welche die beiden Verbindungsstellen (121, 122) verbindet, im Wesentlichen entlang der Vertikalen oder entlang einer Horizontalen verläuft.

4. Stellvorrichtung nach einem der Ansprüche 1 bis 3, **dadurch gekennzeichnet,**
**dass** zur Schwenkung des Lichtbündels um eine der beiden Schwenkachsen (93, 94) die beiden Schäfte (104, 105; 134, 135) gleichzeitig entweder in die gleiche Richtung oder in entgegengesetzten Richtungen bewegbar sind.

5. Stellvorrichtung nach einem der Ansprüche 1 bis 4,
**dadurch gekennzeichnet, dass**
das zweite Stellelement (103) benachbart zum ersten Stellelement (102) angeordnet ist.

6. Stellvorrichtung gemäss einem der Ansprüche 1 bis 5, **dadurch gekennzeichnet, dass** die Achse (106), entlang
welcher der erste Schaft (104;134)
verschiebbar ist, und die Achse (107), entlang welcher der zweite Schaft (105;135) verschiebbar ist, im Wesentlichen parallel zueinander angeordnet sind.

7. Stellvorrichtung gemäss einem der Ansprüche 1 bis 6, **dadurch gekennzeichnet, dass** das erste Stellelement (102) und das zweite Stellelement (103) auf einem Träger angeordnet sind oder in einem Gehäuse (101) enthalten sind, um eine kompakte Einheit zu bilden.

8. Stellvorrichtung gemäss einem der Ansprüche 1 bis 7, **dadurch gekennzeichnet, dass** die Steuerschaltung (116) auf dem Träger angeordnet ist oder in dem Gehäuse (101) enthalten ist.

9. Stellvorrichtung gemäss einem der Ansprüche 1 bis 8, **dadurch gekennzeichnet, dass** mit der Steuerschaltung (116) weitere Steuersignale erzeugbar sind, mit welcher mindestens ein drittes Stellelement ansteuerbar ist.

10. Stellvorrichtung gemäss einem der Ansprüche 1 bis 9, **dadurch gekennzeichnet, dass** die Steuerschaltung (116) Mittel (117) enthält, um wenigstens ein Signal aufzunehmen und zu verarbeiten, welches Informationen über den Zustand des Fahrzeuges enthält, insbesondere die Lage, Neigung, geographische Position, Fahrrichtung und/oder Lenkrichtung des Fahrzeuges, um die Orientierung des Lichtbündels bei Zustandsänderungen des Fahrzeuges verändern zu können.

11. Stellvorrichtung gemäss einem der Ansprüche 1 bis 10, **dadurch gekennzeichnet, dass** die beiden Schwenkachsen (93, 94) im Wesentlichen senkrecht aufeinander stehen und eine der beiden Schwenkachsen (93) im Wesentlichen entlang der Vertikalen verläuft.

12. Stellvorrichtung nach einem der Ansprüche 1 bis 11,
**dadurch gekennzeichnet, dass** das erste Stellelement (102) ein erstes Lagerteil (136) aufweist, das mit einer dritten Verbindungsstelle des Fahrzeuges verbindbar ist, um ein erstes Lager zu bilden,
und
das zweite Stellelement (103) ein zweites Lagerteil (137) aufweist, welches mit einer vierten Verbindungsstelle des Fahrzeuges verbindbar ist, um ein zweites Lager zu bilden,
so dass bei der Bewegung des ersten und zweiten Schaftes (134, 135) das erste und zweite Stellelement (102, 103) mittels des ersten und zweiten Lagers beweglich gelagert sind.

13. Fahrzeugscheinwerfer mit einer Stellvorrichtung gemäss einem der Ansprüche 1 bis 12.

14. Verfahren zur gesteuerten Einstellung der Richtung eines Lichtbündels, welches von einem Scheinwerfer eines Fahrzeuges ausgesendet wird, wobei der Scheinwerfer oder eine Scheinwerferkomponente (91), welche die Richtung des Lichtbündels beeinflusst, um mindestens zwei Schwenkachsen (93, 94) schwenkbar ist, wobei
die Richtung des Lichtbündels mittels eines ersten und eines zweiten Stellelementes (102, 103) geändert wird, wobei
das erste Stellelement (102) einen ersten beweglichen Schaft (104, 134) enthält, dessen eines Ende mit einer ersten Verbindungsstelle (121) des Scheinwerfers oder der Scheinwerferkomponente (91) mechanisch verbunden ist, und
einen ersten Linearantrieb umfasst zum Bewegen des ersten Schaftes entlang seiner Achse (106), und wobei das zweite Stellelement (103) einen zweiten beweglichen Schaft (105, 135) enthält, dessen eines Ende mit einer zweiten Verbindungsstelle (122) des Scheinwerfers oder der Scheinwerferkomponente (91) mechanisch verbunden ist, und einen zweiten Linearantrieb umfasst zum Bewegen des zweiten Schaftes entlang seiner Achse (107), **dadurch gekennzeichnet,**
**dass** das erste und das zweite Stellelement (102, 103) mit einer Steuerschaltung (116) gesteuert werden, mit welcher Steuersignale erzeugt werden, die eine gleichzeitige Bewegung des ersten und zweiten Schaftes (104, 105; 134, 135) bewirken, so dass beide Stellelemente (102, 103) gemeinsam eine Schwenkung des Lichtbündels um die jeweilige Schwenkachse (93, 94) bewirken.

15. Verfahren gemäss Anspruch 14, **dadurch gekennzeichnet, dass** zur Schwenkung des Lichtbündels um eine der beiden Schwenkachsen (93, 94) die beiden Schäfte (104, 105; 134, 135) entlang ihrer Achsen gleichzeitig entweder in die gleiche Richtung oder in entgegengesetzte Richtungen bewegt werden.

## Claims

1. Actuating device for controlled setting the direction of a light beam, which is emitted by a headlamp of a vehicle, wherein the headlamp or a component of the headlamp (91) affecting the direction of the light beam is pivotable around at least two pivot axes (93, 94), wherein the actuating device comprises the following components:
a first actuating element (102), which includes a first movable bar (104; 134) as a mechanical axle, one end of which is mechanically connectable to a first connection point (121) of the headlamp or the component of the headlamp (91) and which comprises a first linear drive for moving the first bar along its axis (106), and
a second actuating element (103), which includes a second movable bar (105; 135) as a mechanical axle, one end of which is mechanically connectable to a second connection point (122) of the headlamp or the component of the headlamp (91) and which comprises a second linear drive for moving the second bar (105; 135) along its axis (107), **characterized by**
a control circuit (116) for controlling the first and the second actuating element (102, 103), by means of which control signals can be generated, which effect a simultaneous movement of the first and the second bar (104, 105) such that the two actuating elements (102, 103) effect together pivoting of the light beam around the respective pivot axis (93, 94).

2. Actuating device according to claim 1, **characterized in that** it is configured for moving the headlamp or the component of the headlamp (91), which is moveably mounted to a holder (92), wherein the holder (92) and the two connection points (121, 122) are arranged at the corners of a substantially isosceles triangle and wherein the axis (123) connecting the two connection points (121, 122) extends substantially along the base line of the isosceles triangle.

3. Actuating device according to one of the claims 1 to 2, **characterized in that** the axis (123) connecting the two connection points (121, 122) extends substantially along the vertical or a horizontal line.

4. Actuating device according to one of the claims 1 to 3, **characterized in that** for pivoting the light beam around one of the two pivot axes (93, 94) the two bars (104, 105; 134, 135) are movable simultaneously either in the same direction or in opposite directions.

5. Actuating device according to one of the claims 1 to 4, **characterized in that** the second actuating element (103) is arranged adjacent to the first actuating element (102).

6. Actuating device according to one of the claims 1 to 5, **characterized in that** the axis (106), along which the first bar (104; 134) is movable, and the axis (107), along which the second bar (105; 135) is movable, are arranged substantially in parallel to each other.

7. Actuating device according to one of the claims 1 to 6, **characterized in that** the first actuating element (102) and the second actuating element (103) are arranged on a carrier or are contained in a housing (101) for forming a compact unity.

8. Actuating device according to one of the claims 1 to 7, **characterized in that** the control circuit (116) is arranged on the carrier or is contained in the housing (101).

9. Actuating device according to one of the claims 1 to 8, **characterized in that** further control signals can be generated by means of the control circuit (116), by means of which a third actuating element is controllable.

10. Actuating device according to one of the claims 1 to 9, **characterized in that** the control circuit (116) includes means (117) for receiving and processing a signal which includes information on the status of the vehicle, in particular the position, the incline, the geographical location, the driving direction and/or the steering direction of the vehicle, for being able to change the orientation of the light beam in case of status modifications of the vehicle.

11. Actuating device according to one of the claims 1 to 10, **characterized in that** the two pivot axes (93, 94) are arranged substantially perpendicular to each other and one of the two pivot axes (93) extends substantially along the vertical.

12. Actuating device according to one of the claims 1 to 11, **characterized in that** the first actuating element (102) comprises a first bearing part (136) which is connectable to a third connecting point of the vehicle for forming a first bearing, and the second actuating element (103) comprises a second bearing part (137) which is connectable to a fourth connecting point of the vehicle for forming a second bearing such that when the first and second bar (134, 135) are moved the first and second actuating element (102, 103) are movably arranged by means of the first and second bearing.

13. Headlamp of a vehicle with an actuating device according to one of the claims 1 to 12.

14. Method for controlled setting the direction of a light beam, which is emitted by a headlamp of a vehicle, wherein the headlamp or a component of the headlamp (91) affecting the direction of the light beam is pivotable around at least two pivot axes (93, 94), wherein the direction of the light beam is changed by means of a first and a second actuating element (102, 103), wherein
the first actuating element (102) includes a first movable bar (104, 134) one end of which is mechanically connected to a first connection point (121) of the headlamp or the component of the headlamp (91) and comprises a first linear drive for moving the first bar along its axis (106), and wherein
the second actuating element (103) includes a second movable bar (105, 135) one end of which is mechanically connected to a second connection point (122) of the headlamp or the component of the headlamp (91) and comprises a second linear drive for moving the second bar along its axis (107), **characterized in that**
the first and the second actuating element (102, 103) are controlled by means of a control circuit (116), by means of which control signals are generated, which effect a simultaneous movement of the first and the second bar (104, 105; 134, 135) such that the two actuating elements (102, 103) effect together pivoting of the light beam around the respective pivot axis (93, 94).

15. Method according to claim 14, **characterized in that** for pivoting the light beam around one of the two axes (93, 94) the two bars (104, 105; 134, 135) are moved simultaneously either in the same direction or in opposite directions.

## Revendications

1. Dispositif d'actionnement pour ajuster de manière commandée la direction d'un faisceau de lumière émis par un phare d'un véhicule, où le phare ou un composant du phare (91) influant sur la direction du faisceau de lumière est pivotable autour d'au moins deux axes de pivotement (93, 94), où le dispositif d'actionnement comprend les composants suivants:
un premier élément d'actionnement (102), qui comprend une première tige mobile (104; 134) comme axe mécanique, dont une extrémité est connectable mécaniquement à un premier point de connexion (121) du phare ou du composant du phare (91), et qui comprend un premier actionnement linéaire pour mouvoir la première tige le long de son axe (106), et
un deuxième élément d'actionnement (103), qui comprend une deuxième tige mobile (105; 135) comme axe mécanique, dont une extrémité est connectable mécaniquement à un deuxième point de connexion (122) du phare ou du composant du phare (91), et qui comprend un deuxième actionnement linéaire pour mouvoir la deuxième tige (105; 135) le long de son axe (107), **caractérisé par**
un circuit de commande (116) pour commander le premier et le deuxième élément d'actionnement (102, 103), au moyen duquel peuvent être produits des signaux de commande, qui provoquent un mouvement simultané de la première et de la deuxième tige (104, 105) de sorte que les deux éléments d'actionnement (102, 103) provoquent ensemble un pivotement du faisceau de lumière autour de l'axe de pivotement (93, 94) correspondant.

2. Dispositif d'actionnement selon la revendication 1, **caractérisé en ce qu'**il est conçu pour mouvoir le phare ou le composant du phare (91), qui est monté mobile sur une fixation (92), où la fixation (92) et les deux points de connexion (121, 122) sont agencés sur les points angulaires d'un triangle essentiellement isocèle et où l'axe (123) joignant les deux points de connexion (121, 122) s'étend essentiellement le long de la base du triangle isocèle.

3. Dispositif d'actionnement selon l'une des revendications 1 à 2, **caractérisé en ce que** l'axe (123) joignant les deux points de connexion (121, 122) s'étend essentiellement le long de la verticale ou le long d'une horizontale.

4. Dispositif d'actionnement selon l'une des revendications 1 à 3, **caractérisé en ce que**, pour le pivotement du.faisceau de lumière autour d'un des deux axes de pivotement (93, 94), les deux tiges (104, 105; 134, 135) sont mobiles en même temps dans la même direction ou dans des directions opposées.

5. Dispositif d'actionnement selon l'une des revendications 1 à 4, **caractérisé en ce que** le deuxième élément d'actionnement (103) est agencé de manière adjacente au premier élément d'actionnement (102).

6. Dispositif d'actionnement selon l'une des revendications 1 à 5, **caractérisé en ce que** l'axe (106) le long duquel la première tige (104; 134) est déplaçable et l'axe (107) le long duquel la deuxième tige (105; 135) est déplaçable, sont agencés essentiellement parallèlement l'un à l'autre.

7. Dispositif d'actionnement selon l'une des revendications 1 à 6, **caractérisé en ce que** le premier élément d'actionnement (102) et le deuxième élément d'actionnement (103) sont agencés sur un support ou sont compris dans un boîtier (101) afin de former une unité compacte.

8. Dispositif d'actionnement selon l'une des revendications 1 à 7, **caractérisé en ce que** le circuit de commande (116) est agencé sur le support ou est compris dans le boîtier (101).

9. Dispositif d'actionnement selon l'une des revendications 1 à 8, **caractérisé en ce que** des signaux de commande additionnels peuvent être produits par le circuit de commande (116), au moyen duquel au moins un troisième élément d'actionnement est commandable.

10. Dispositif d'actionnement selon l'une des revendications 1 à 9, **caractérisé en ce que** le circuit de commande (116) comprend des moyens (117) pour recevoir et traiter au moins un signal comprenant des informations sur l'état du véhicule, en particulier la position, l'inclination, la position géographique, la direction de course et/ou la direction de braquage du véhicule afin de pouvoir changer l'orientation du faisceau de lumière en cas de modifications d'état du véhicule.

11. Dispositif d'actionnement selon l'une des revendications 1 à 10, **caractérisé en ce que** les deux axes de pivotement (93, 94) sont essentiellement perpendiculaires entre eux et l'un des deux axes de pivotement (93) s'étend essentiellement le long de la verticale.

12. Dispositif d'actionnement selon l'une des revendications 1 à 11, **caractérisé en ce que** le premier élément d'actionnement (102) comprend une première partie de palier (136), qui est connectable à un troisième point de connexion du véhicule pour former un premier palier, et **en ce que** le deuxième élément d'actionnement (103) comprend une deuxième partie de palier (137), qui est connectable à un quatrième point de connexion du véhicule pour former un deuxième palier de sorte que, en cas de mouvement de la première et la deuxième tige (102, 103), le premier et le deuxième élément d'actionnement (102, 103) sont montés mobiles au moyen du premier et du deuxième palier.

13. Phare d'un véhicule avec un dispositif d'actionnement selon l'une des revendications 1 à 12.

14. Procédé pour ajuster de manière commandée la direction d'un faisceau de lumière émis par un phare d'un véhicule, où le phare ou un composant du phare (91) influant sur la direction du faisceau de lumière est pivotable autour d'au moins deux axes de pivotement (93, 94), où la direction du faisceau de lumière est changé au moyen d'un premier et d'un deuxième élément d'actionnement (102, 103), où le premier élément d'actionnement (102) comprend une première tige mobile (104, 134) dont une extrémité est connectée mécaniquement à un premier point de connexion (121) du phare ou du composant du phare (91) et un premier actionnement linéaire pour mouvoir la première tige le long de son axe (106), et où le deuxième élément d'actionnement (103) comprend une deuxième tige mobile (105, 135) dont une extrémité est connectée mécaniquement à un deuxième point de connexion (122) du phare ou du composant du phare (91) et un deuxième actionnement linéaire pour mouvoir la deuxième tige le long de son axe (107), **caractérisé en ce que** le premier et le deuxième élément d'actionnement (102, 103) sont commandés par un circuit de commande (116), au moyen duquel sont produits des signaux de commande, qui provoquent un mouvement simultané de la première et de la deuxième tige (104, 105; 134, 135) de sorte que les deux éléments d'actionnement (102, 103) provoquent ensemble un pivotement du faisceau de lumière autour de l'axe de pivotement (93, 94) correspondant.

15. Procédé selon la revendication 14, **caractérisé en ce que**, pour le pivotement du faisceau de lumière autour d'un des deux axes de pivotement (93, 94), les deux tiges (104, 105; 134, 135) sont mues le long de leurs axes en même temps dans la même direction ou dans des directions opposées.
